Europäisches Patentamt

(19) European Patent Office

Office européen des brevets

(11) Publication number: **0 457 707 A2**

# EUROPEAN PATENT APPLICATION

(21) Application number: **91480063.6**

(22) Date of filing: **09.04.91**

(51) Int. Cl.⁵: **G06F 15/40, G06F 15/21**

(30) Priority: **16.05.90 US 524763**

(43) Date of publication of application:
**21.11.91 Bulletin 91/47**

(84) Designated Contracting States:
**DE FR GB**

(71) Applicant: **INTERNATIONAL BUSINESS MACHINES CORPORATION**
**Armonk, NY 10504 (US)**

(72) Inventor: **Wang, Diana S.**
**13 Creekmore Drive**
**Trophy Club, Texas 76262 (US)**

(74) Representative: **Tubiana, Max et al**
**Compagnie IBM France Département de Propriété Intellectuelle**
**F-06610 La Gaude (FR)**

(54) **Method for hierarchical grouping of documents in a data processing system.**

(57) Documents within a data processing system are typically filed in a hierarchical and linear relationship within an electronically designated "folder" or "subfolder" wherein the individual documents are arranged in sequential order by a specified descriptor or position number. In accordance with the method of the present invention, a new parameter is created which specifies the attribute of "document in grouping." This parameter is utilized to identify those documents which are grouped together within a folder or subfolder. An operand is also specified which permits a user to specify a group name whenever a new document is entered into the library resource storage area. By creating a specified group of documents, each identified by a unique group name, a selected group of documents may be identified, selected and processed as a group. Since all documents within a selected group are located within a single hierarchical level the retrieval and processing of an entire group of documents may be efficiently and rapidly processed utilizing the method of the present invention.

EP 0 457 707 A2

Jouve, 18, rue Saint-Denis, 75001 PARIS

## BACKGROUND OF THE INVENTION

### 1. Technical Field:

The present invention relates in general to the field of data processing systems and in particular to methods of managing documents within a data processing system. Still more particularly, the present invention relates to methods of providing a selective and temporary grouping of documents within a single hierarchical level within a data processing system.

### 2. Description of the Related Art:

In recent times, automation of offices is rapidly becoming a reality for an increasing number of organizations. Office automation helps the organization integrate data files with text, store and retrieve correspondence and reports electronically, distribute documents electronically and support the day-to-day activities of administrative personnel, professionals and managers.

While some of the benefits of electronic document processing may be realized from a single, stand-alone office system, a network which connects office systems in various locations in the organization increases the productivity of the organization. Physically, a network is a combination of interconnected pieces of equipment and programs utilized for moving information between points where it may be generated, processed, stored, and/or used. From the viewpoint of a user of the network, the network is a collection of services which are useful in creating, revising, distributing, filing, and retrieving documents.

In today's electronic office documents may be physically grouped or stored utilizing one of the following techniques: partition data sets, directories, folders and stapler/staplee relations. Partition data sets are storage areas on a disk or other form of storage medium. Documents stored in a partition data set only exist in that storage area and a partition data set may not be deleted until all of the documents included therein have been removed. Generally, the documents which are filed in a partition data set are listed in the order created and there is no other relationship regarding the order of the documents.

Directories are similar to partition data sets in that they are physical storage areas for documents for files. Documents may not exist in more than one physical storage area. The documents contained in a directory are not logically organized.

With regard to both the partition data set and the directory, if a user filed a group of documents which are related to a general topic and wanted to review the group of documents, the user would have to first locate the partition data set or sets or the directory or directories containing the documents. In the partition data sets and directories, documents must be deleted from the bottom up. Additionally, it is very difficult to rearrange documents stored or grouped utilizing these two techniques. The documents must be copied and then deleted. Moreover, partition data sets, except for the contents thereof, may not be distributed. Directories may not be distributed in their entirety. Linear and hierarchical groupings may not be distributed using directories or partition data sets because the groupings mechanism utilized therein will be lost. This type of operation technique reduces the efficiency of the electronic office.

Folders are documents which form hierarchical and linear relationships between a group of documents. Folders may be nested to form the hierarchical relationship whereby a group of documents within a folder are ordered to form the linear relationship. The documents within a folder may be organized sequentially by a specified descriptor or by a specified description number. Access to a folder is typically independent from access to the documents contained therein. Documents within a folder may be manipulated as a single document, as a set of documents which comprise the entire folder or a set of documents which comprise a specified subfolder of the folder document.

A folder may be utilized to form a directed or one-to-one relationship between two documents. This requires the folder to be a first document and the document contained therein to be a second document. This relationship suffers in that not all documents are folders and that if any other documents are entered into the folder, the one-to-one relationship between the first and second document becomes unclear.

In an attempt to solve this problem the stapler/staplee relationship has been recently proposed in United States Patent Application Serial No. 277,387, filed November 29, 1988, entitled "Method Of Filing Stapled Documents." In accordance with the method disclosed in the above-referenced patent application, the staple relationship between two documents is established by entering a definition of the staple relationship which includes any attributes to be associated with the identified documents. Thereafter, the system will create the staple relationship and file the identified documents in a library within the system. The system will then maintain the staple relationship between the two identified documents.

While each of the foregoing techniques provides a method whereby a user may define a hierarchy of documents or a relationship between two identified documents, none of the enumerated methods permit a user to group multiple documents within a folder or a subfolder on a single hierarchical level. It should therefore be apparent that a need exists for a method whereby a group of documents within an electronically designated folder may be identified as members of a defined group and selected and/or processed as a group.

## SUMMARY OF THE INVENTION

It is therefore one object of the present invention to provide an improved data processing system.

It is another object of the present invention to provide an improved method of managing documents within a data processing system.

It is yet another object of the present invention to provide an improved method of managing documents within a data processing system which permits the selective and temporary grouping of documents within a single hierarchical level within a data processing system.

The foregoing objects are achieved as is now described. In a data processing system documents are typically filed within the system in a hierarchical and linear relationship within an electronically designated "folder" or "subfolder" wherein the individual documents are arranged in sequential order by a specified descriptor or position number. In accordance with the method of the present invention, a new parameter is used to specify the attribute "document in grouping." This new parameter is utilized to identify those documents which are grouped together within a folder or a subfolder. An operand is also specified which permits a user to specify a group name whenever a new document is entered into the library. By creating specified groups of documents, each identified by a unique group name, a selected group of documents may be identified, selected and processed as a part of that group. Since all documents within a selected group are located within a single hierarchical level the retrieval and processing of an entire group of documents may be efficiently and rapidly processed utilizing this method.

## BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a pictorial representation of a distributed data processing network which may be utilized to implement the method of the present invention;

Figure 2 is a pictorial representation of the grouping of multiple documents within a single folder into uniquely named groups;

Figure 3 is a high level flow chart depicting the creation of a group of documents in accordance with the method of the present invention; and

Figure 4 is a high level flow chart depicting the processing of a group of documents in accordance with the method of the present invention.

## DETAILED DESCRIPTION OF THE INVENTION

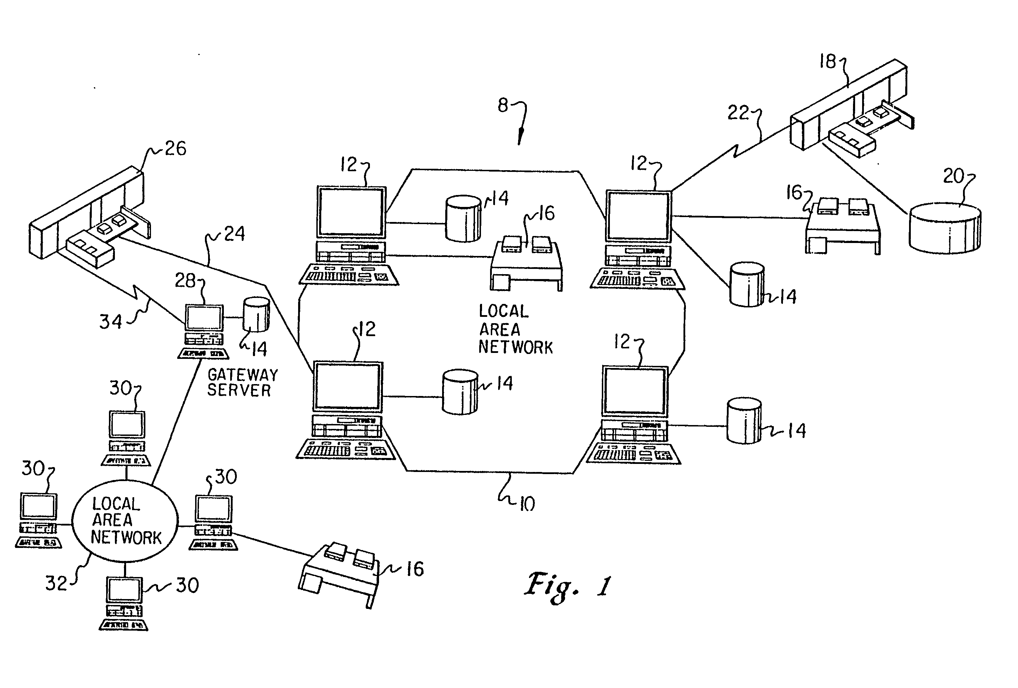

With reference now to the figures and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store the various data processing procedures or documents which may be periodically accessed and processed by a user within a data processing system 8, in accordance with the method of the present invention. In a manner well known in the prior art, each such data processing procedure or document may be stored within a storage device 14 which is associated with a Resource Manager or Library Service, which is responsible for maintaining and updating all resource objects associated therewith.

Still referring to Figure 1, it may by seen that data processing network 8 may also include multiple mainframe computers, such as mainframe computer 18, which may be preferably coupled to a Local Area Network (LAN) 10 by means of communications link 22. Mainframe computer 18 may also be coupled to a storage device 20 which may serve as remote storage for Local Area Network (LAN) 10. Similarly, Local Area Network (LAN) 10 may be coupled via communications link 24 through a subsystem control unit/communications controller 27 and communications link 34 to a gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of data processing procedures or documents may be stored within storage device 20 and controlled by mainframe computer 18, as a Resource Manager or Library Service for the data processing procedures and thus stored. Of course, those skilled in the art will appreciate that mainframe computer 10 may be located a great geographical distance from Local Area Network (LAN) 10 and similarly Local Area Network (LAN) 10) may be located a substantial distance from Local Area Network (LAN) 32. That is, Local Area Network (LAN) 32 may be located in California while Local Area Network (LAN) 10) may be located within Texas and mainframe computer 18 may be located in New York.

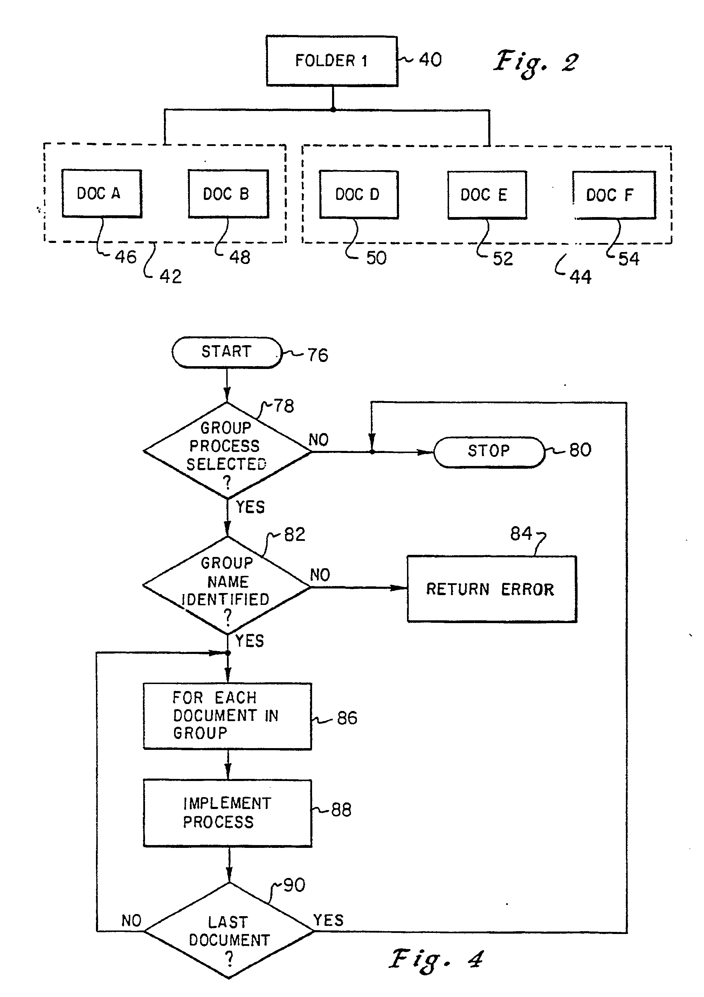

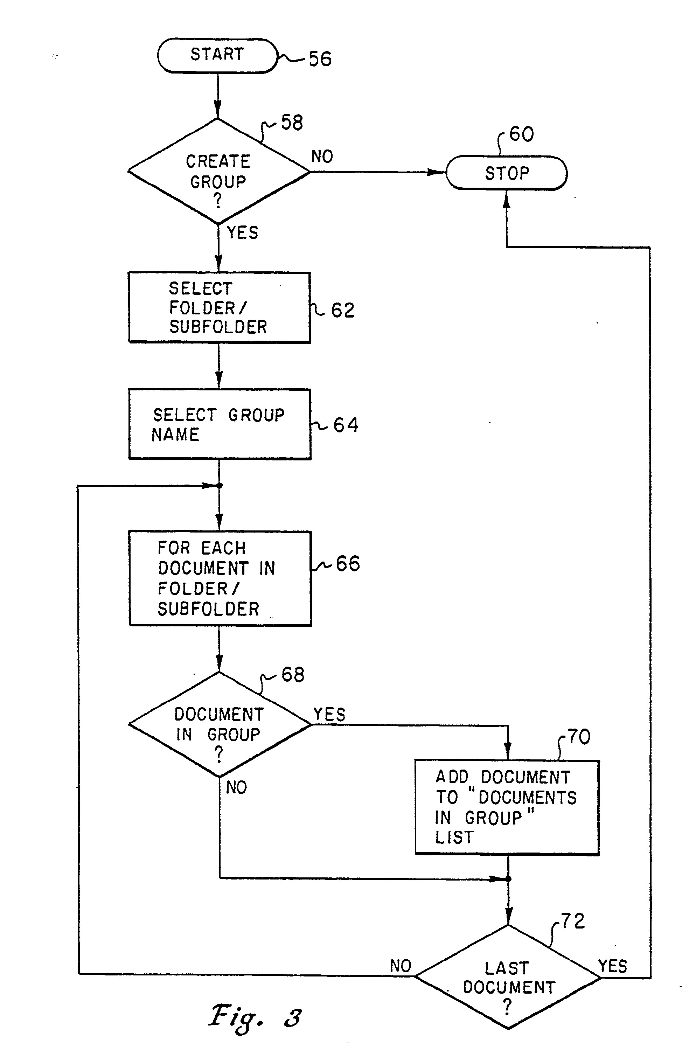

Referring now to Figure 2 there is depicted a pictorial representation of the grouping of multiple documents within a single folder into uniquely named groups. As is illustrated, Figure 2 includes a graphic depiction of a folder 40 which may be electronically designated and created in accordance with those methods known in the prior art. Contained within folder 40 are a plurality of documents 46, 48, 50, 52 and 54. Each of these documents are contained within folder 40 and all such documents are stored within a single hierarchical level among the multiple levels of document storage which may exist within any library or resource storage unit within distributed data processing system 8. (See Figure 1).

In accordance with an important feature of the present invention, documents 46 and 48 have been designated as forming a group of documents 42. Similarly, documents 50, 52, and 54 are designated as occurring within group 44. As will be explained in greater detail herein, by creating a unique group name and associating that group name with any desired document a user within distributed data processing system 8 may simply and easily create a selective and temporary group of documents within a single hierarchical level among all those documents or applications stored within a library or resource storage area within distributed data processing system 8. Thus, it should be apparent that the selection and processing of multiple documents which have been previously identified as part of a unique group may be simply and efficiently accomplished by utilizing that unique group name in the selection and processing of those documents.

With reference now to Figure 3 there is depicted a high level flow chart illustrating the creation of a group of documents in accordance with the present invention. As is illustrated, the process begins at block 56 and thereafter passes to block 58 wherein a determination is made as to whether or not the user desires to create a unique group of documents within a single hierarchical level. If not, the process terminates, as illustrated in block 60.

In the event the user does desire to create a unique selective and temporary group of documents within a single hierarchical level, as determined in block 58, then block 62 illustrates the definition by the user of the folder or subfolder within which the unique group will be created. Thereafter, block 64 illustrates the selection by the user or the system operator of a unique group name which will be associated with the group to be created. Of course, as those skilled in the art will appreciate, it will be necessary to conform this selected group name to selected criteria identified by the system operator in order to ensure that the group name selected is truly unique. In this manner, confusion may be avoided upon subsequent referrals to the named group.

Next, block 66 illustrates the repetitive action for each document within the folder or subfolder which will be accomplished in the establishment of a group of documents in accordance with the method of the present invention. Block 68 then illustrates a determination of whether or not the document currently under examination is to be included within the group. If so, block 70 illustrates the adding of that document to the "documents in group" list which will be established. If the document currently under consideration is not to be included within the identified group, the process returns iteratively to block 66. Thereafter, after each document in the folder or subfolder has been examined and either added to the list of documents within the "documents in group" listing or identified as a document which is not within the group block 72 illustrates a determination of whether or not the document under consideration is the last document with the folder or subfolder. If not, the process again returns to block 66 and proceeds iteratively. In the event the document currently under consideration is the last document within the folder the process passes to block 60 and terminates.

Finally, referring to Figure 4 there is depicted a high level flow chart illustrating the processing of a group of documents in accordance with the method of the present invention. As above, the process begins at block 76 and thereafter passes to block 78 wherein a determination is made as to whether or not the user in question has selected a group process. If not, this particular process terminates, as illustrated in block 80. However, in the event the user has selected a group process the process proceeds to block 82 wherein a determination is made whether or not the user has identified an appropriate group name. If not, block 84 illustrates the returning of an error message.

After determining that a group process has been selected and that an appropriate group name has been identified by the user, block 86 illustrates the iterative processing of each document within the identified group. Block 88 depicts the implementation of the process in question and block 90 then illustrates a determination of whether or not the document within the group currently under consideration is the last document in the identified group. If not, the process returns to block 86 and proceeds iteratively. In the event the document under current consideration is the last document within the identified group then the process terminates as depicted in block 80.

Upon reference to the foregoing those skilled in the art will appreciate that the Applicant has, in the present application, created a method whereby a group of documents or data objects within a single hierarchical level within a data processing system may be selectively and temporarily grouped together by utilizing a unique group name identifier so that these documents may be subsequently retrieved and processed as a single entity. By permitting the selective grouping of documents together at a single hierarchical level without requiring the implementation of multiple level divisions for groups of documents, the processing and retrieval of these documents is greatly enhanced in efficiency.

While the invention has been particularly shown and described with reference to a preferred embodiment, it will be understood by those skilled in the art that various changes in form and detail may be made therein without departing from the spirit and scope of the invention.

## Claims

1. A method in a data processing system having a plurality of data objects stored in a hierarchical manner, of creating a selective and temporary grouping of data objects within a single hierarchical level, said method comprising the steps of:

    designating a defined hierarchical level identifier for each data object within a selected hierarchical level within said data processing system;

    selecting a plurality of data objects within said selected hierarchical level; and

    for each of said selected plurality of data objects, associating a unique group name within said defined hierarchical level identifier wherein said selected plurality of data objects may be selected and processed as a group.

2. The method in a data processing system having a plurality of data objects stored in a hierarchical manner, of creating a selective and temporary group of data objects within a single hierarchical level according to Claim 1 wherein said defined hierarchical level identifier for each data object within a selected hierarchical level comprises a folder forming a hierarchical and linear relationship between a group of data objects.

3. The method in a data processing system having a plurality of data objects stored in a hierarchial manner, of creating a selective and temporary group of data objects within a single hierarchical level according to Claim 2, wherein said plurality of data objects within a folder are organized sequentially by a specified position descriptor.

4. The method in a data processing system having a plurality of documents stored therein for filing documents within said system, said method comprising the steps of:

    grouping a plurality of documents within an electronically designated folder, said folder forming a hierarchical and linear relationship between individual documents within said plurality of documents; and

    associating a unique group name with selected ones of said plurality of documents wherein said selected ones of said plurality of documents may be selected and processed as a group.

5. The method in a data processing system having a plurality of documents stored therein for filing documents within said system according to Claim 4 wherein said each of said selected ones of said plurality of documents associated with said unique group name is disposed within a single selected hierarchical level.

Fig. 1

LOCAL AREA NETWORK

GATEWAY SERVER

LOCAL AREA NETWORK

*Fig. 2*

```
                    ┌──────────────┐
                    │   FOLDER 1   │~40
                    └──────────────┘
```

DOC A  ~46   DOC B ~48   (42)     DOC D ~50   DOC E ~52   DOC F ~54   (44)

*Fig. 4*

START ~76

GROUP PROCESS SELECTED? ~78

NO → STOP ~80

YES ↓

GROUP NAME IDENTIFIED? ~82

NO → RETURN ERROR (84)

YES ↓

FOR EACH DOCUMENT IN GROUP ~86

IMPLEMENT PROCESS ~88

LAST DOCUMENT? ~90

NO / YES

Fig. 3